# EUROPEAN PATENT SPECIFICATION

(11) **EP 2 839 487 B1**
(45) Date of publication and mention of the grant of the patent: **05.08.2020**
(21) Application number: 13724857.1
(22) Date of filing: 11.04.2013
(51) Int. Cl.: H01B 7/40, H02G 3/04, H01B 7/22, F21S 8/06

(54) **INSULATED ELECTRIC CORD**
ISOLIERTES STROMKABEL
CORDON ÉLECTRIQUE ISOLÉ

(30) Priority: 16.04.2012 GB 201206609; 18.04.2012 GB 201206825; 08.04.2013 GB 201306282
(43) Date of publication of application: 25.02.2015
(73) Proprietor: Gripple Limited, Sheffield S4 7UQ (GB)
(72) Inventor: KINSEY, David, Haverhill Suffolk CB9 7AW (GB)
(86) International application number: PCT/GB2013/000163
(87) International publication number: WO 2013/156745

(56) References cited:
- CH-A- 301 554
- DE-B- 1 017 230
- DE-U1- 9 302 982
- GB-A- 2 469 521
- US-A1- 2012 018 212

## Description

This invention relates to insulated electric cords. More particularly, but not exclusively, this invention relates to flexible insulated electric cords. Embodiments of the invention relate to flexible electric cords for supporting loads.

A standard insulated electrical flexible cord comprises conductors to carry the current, insulating material to prevent the conductors coming into electrical contact with one another, and an insulating sheath material to protect the insulating material. Some electric cords can be used to suspend light fittings from ceilings, providing the light fittings do not exceed a maximum weight.

DE 9302982 U1 discloses electric cord having electric conductors. An elongate cavity receives a supporting steel cable.

According to the invention, an insulated electric cord is provided as defined in claim 1, and a method of suspending an electrical device from a support using such an insulated electric cord is provided as defined in claim 14.

According to one aspect of this invention, there is provided an insulated electric cord comprising an elongate outer covering arrangement, first and second elongate electrical conductors held within the outer covering arrangement and extending longitudinally therethrough, and an elongate load bearing member held within the outer covering arrangement and extending longitudinally therethrough, wherein the outer covering arrangement has an elongate access formation to allow a portion of the load bearing member to be extracted from the outer covering arrangement, wherein the access formation comprises a severable region of weakness of the outer covering arrangement, said severable region extending alongside the load bearing member.

An insulated electric cord for suspending an electrical device from a support may comprise an elongate outer covering arrangement, first and second elongate electrical conductors for electrically connecting the electrical device to wiring of a mains supply of electricity at the support, said first and second elongate electrical conductors being held within the outer covering arrangement and extending longitudinally therethrough, an elongate load bearing member for connection at a first end portion thereof to a first non-electrical load bearing connector in the device and for connection at a second opposite end portion to a second non-electrical load bearing connector at the support, the load bearing member being held within the outer covering arrangement and extending longitudinally therethrough, wherein the outer covering arrangement has an access formation to allow the first and second opposite end portions of the load bearing member to be extracted from the outer covering arrangement via the access formation and connected respectively to the aforesaid load bearing connectors.

A suspension arrangement may comprise an insulated electric cord as described above, an electrical device having a first non-electrical load bearing connector, and a support having a second non-electrical load bearing connector, said first and second elongate electrical conductors electrically connecting the electrical device to wiring of a mains supply of electricity at the support, said elongate load bearing member being connected at the first end portion thereof to the first non-electrical load bearing connector in the device and being connected at the second opposite end portion thereof to the second non-electrical load bearing connector at the support, wherein the first and second opposite end portions of the load bearing member extend from the outer covering arrangement via the access formation.

According to another aspect of this invention, there is provided a method of suspending an electrical device from a support using an insulated electric cord as described above, said method comprising electrically connecting the first and second elongate electrical conductors to the electrical device and to a supply of electricity at the support, extracting a first end portion of the load bearing member from the outer covering arrangement via the access formation, effecting a non-electrical connection between a first end portion of the load bearing member and a first load bearing connector in the device, extracting a second opposite end portion of the load bearing member from the outer covering arrangement via the access formation, and effecting a non-electrical connection between a second end portion of the load bearing member and a second load bearing connector at the support.

The insulated electric cord may comprise a flexible insulated electric cord.

The portion of the load bearing member so extracted may be an end portion. The access formation may allow opposite end portions of the load bearing member to be extracted from the outer covering arrangement.

The step of extracting the first end portion of the load bearing member from the outer covering arrangement may comprise peeling the first end portion of the load bearing member from the outer covering arrangement via the access formation. The step of extracting the second end portion of the load bearing member from the outer covering arrangement may comprise peeling the second end portion of the load bearing member from the outer covering arrangement via the access formation.

If desired, the extracted load bearing member may be inserted back into the covering arrangement after extraction. This provides the advantage in the embodiments described herein that some of the load bearing member can be hidden away in the covering arrangement if, for example, too much of the load bearing member is extracted.

The access formation may be elongate. The access formation may extend longitudinally along the outer covering arrangement. The access formation may extend substantially the whole length of the outer covering arrangement. In an example not according to the invention, the access formation may be an elongate opening defined by the elongate outer covering arrangement.

The feature of the access formation extending substantially the whole length of the outer covering arrangement provides the advantages in the embodiments described herein that the manufacturing cost is minimised, and the insulated electric cord can be cut to any desired length.

According to the invention, the access formation comprises a severable region of the outer covering arrangement. The severable region may be thinner than the remainder of the outer covering arrangement, said region extending alongside the load bearing member. The severable region may be configured to allow easy and safe access to the load bearing member. In the embodiment described herein, the severable region is sufficiently wide so as not to affect adversely the overall performance of the outer covering arrangement.

The outer covering arrangement may be flexible. The outer covering arrangement may have a substantially circular cross-sectional end profile.

The insulated electric cord may include a third elongate electrical conductor held within the outer covering arrangement. Each elongate conductor may be embedded in the material of the outer covering arrangement.

The outer covering arrangement may define an elongate cavity extending longitudinally through the outer covering arrangement. In the example, the elongate cavity may have a substantially circular cross-sectional end profile. The load bearing member may extend through the elongate cavity. The access formation may be an elongate opening of the cavity to allow said portion of the load bearing member to be removed from the outer covering arrangement.

In the example, the access formation may include a channel extending from the opening of the cavity to an external surface of the outer covering arrangement. In the example, the outer covering arrangement may be an elongate insulating sheath.

In an embodiment, the outer covering arrangement may comprise an outer sleeve and an insulating sheath. The outer sleeve may be provided around the insulating sheath. The outer sleeve may extend substantially the whole length of the insulating sheath. The load bearing member may extend through the opening in the insulating sheath to engage the sleeve.

The portion of the outer sleeve in engagement with the load bearing member may be weaker than the remainder of the sleeve. The portion of the sleeve in engagement with the load bearing member may be thinner than the remainder of the sleeve.

The insulating sheath may define at least one elongate space extending longitudinally through the outer covering arrangement. The conductors may be mounted in the, or each, elongate space. In the example, a single elongate space is defined through the insulating sheath, whereby each of the conductors extends longitudinally through the single elongate space. In the embodiment, a respective elongate space may be defined in the outer covering arrangement for each conductor, whereby each conductor extends longitudinally through the respective space. The outer covering arrangement may engage around a major proportion of the longitudinally extending perimeter of each conductor.

In the embodiment, the elongate cavity and the, or each, elongate space may be defined in the insulating sheath.

In the example, the elongate space may have a substantially triangular end profile. Each of the conductors may be provided at a respective apex of the triangle.

In the embodiment, each elongate space may have a substantially circular end profile.

Each conductor may comprise an elongate electrically conductive core, which may be formed of a metal, such as copper. Each conductor may comprise an elongate insulator extending around the electrically conductive core. The insulator may be formed of a synthetic material, which may be a resilient synthetic material, such as a polymer material. Each insulator may be plastically deformable. The synthetic material may comprise PVC.

The load bearing member may be a wire rope, such as a 7 x 7 wire rope.

The insulating sheath may be formed of a synthetic material, which may be electrically insulating and may be a resilient synthetic material, such as a polymer material. The insulating sheath may be plastically deformable.

Reference is now made to the accompanying drawings, in which:
Figure 1 is a cross-sectional end view of an exemplary electrically insulating cord not according to the invention,
Figure 2 is a perspective view of an end region of the electrically insulating cord shown in Figure 1;
Figure 3 shows the connection of one end region of the electrically insulating cord to a fixture;
Figure 4 shows the connection of the opposite end region of the insulating cord to a connection arrangement in a ceiling; and
Figure 5 is a cross-sectional end view of an electrically insulating cord, being an embodiment of the invention.

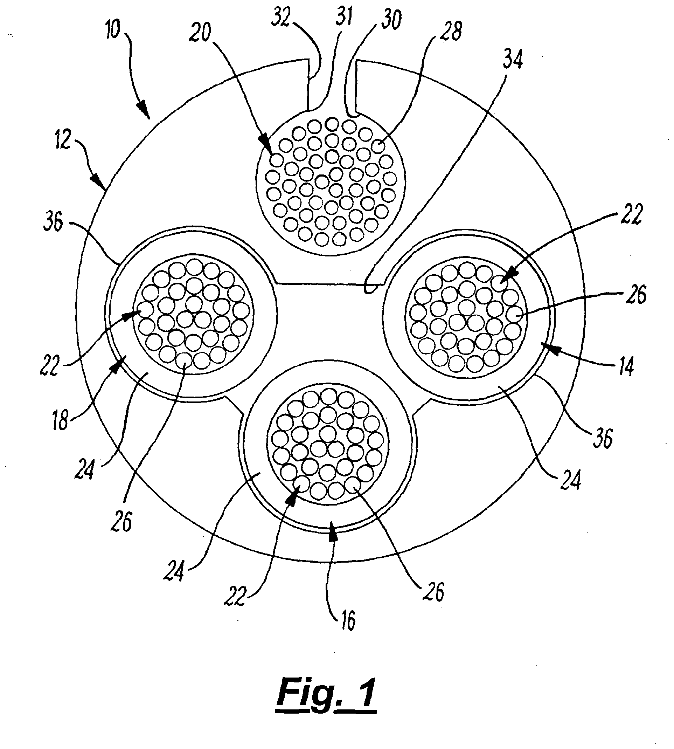

A flexible insulating electric cord 10 is shown in Figures 1 to 4 of the drawings, and comprises a flexible elongate outer covering arrangement in the form of an insulating sheath 12 formed of a suitable plastically deformable synthetic material, such as PVC. The flexible electrically insulating cord 10 further includes three electrically insulating elongate conductors 14, 16, 18 embedded within the flexible insulating sheath 12, and an elongate load bearing member 20, also embedded within the insulating sheath 12. The conductors 14, 16, 18 and the load bearing member 20 extend longitudinally through the whole length of the insulating sheath 12. Each of the elongate conductors 14, 16, 18 comprises an elongate electrically conductive core 22 and an insulator 24 surrounding the electrically conductive core 22. The core 12 of each of the conductors 14, 16, 18 comprises a plurality of strands 26 of an electrically conductive material, such as copper. The elongate strands 26 are arranged around each other to form a wire.

The load bearing member 20 comprises a plurality of elongate strands 28 of a load bearing material, such as steel. The elongate strands 28 are arranged around each other to form a wire.

The insulating sheath 12 defines an elongate cavity 30 in which the load bearing member 20 is held. The elongate cavity 30 extends longitudinally through the whole length of the insulating sheath 12. As can be seen from Figure 1, the elongate cavity 30 has a substantially circular cross-sectional end profile.

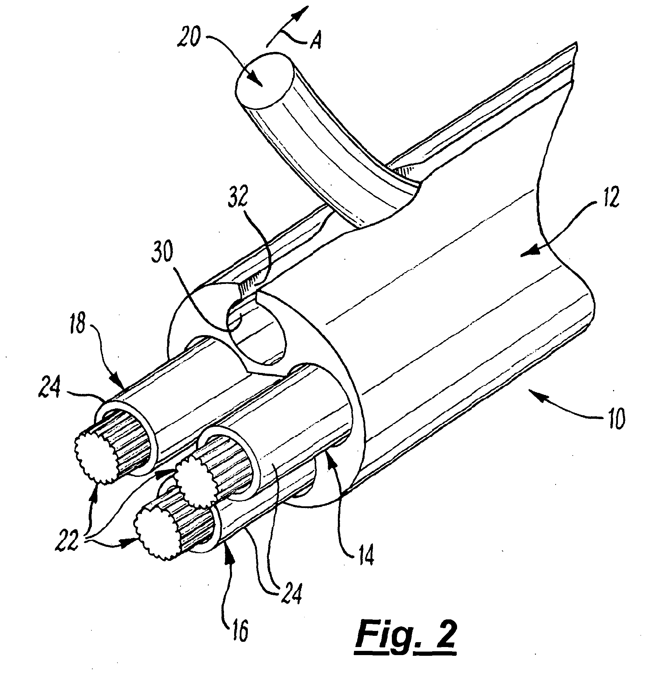

The insulating sheath 12 has an access formation in the form of an elongate opening 31 in the insulating sheath 12 for the cavity 30 which extends the longitudinally through the whole length of the insulating sheath 12. An elongate channel 32 extends from the opening 31 to the external surface of the insulating sheath 12. The elongate opening 31 communicates with the elongate cavity 30, and allows the end portions of the load bearing member 20 to be extracted from the cavity 30 in which the load bearing member 20 is held, and peeled outwardly from the insulating sheath 12, as shown by the arrow A in Figure 2

The insulating sheath 12 defines an elongate space 34 extending the length of the insulating sheath. The conductors 14, 16, 18 are provided within the elongate space 34.

The elongate space 34 is of a generally triangular configuration having part circular elongate recesses 36 at each apex of the triangle. The conductors 14, 16, 18 are held within a respective one of the recesses 36. As can be seen, each of the recesses extends around a major portion of the longitudinally extending perimeter of the respective conductors 14, 16, 18, thereby holding the conductors 14, 16, 18 in position.

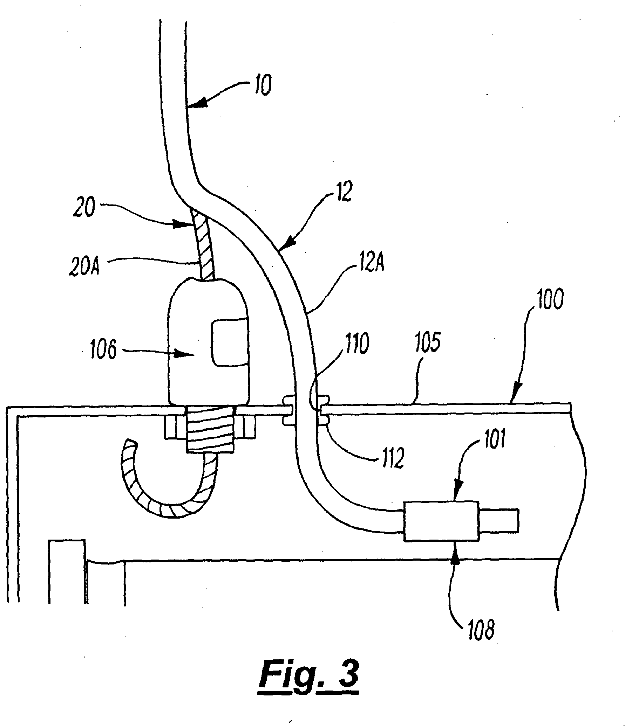

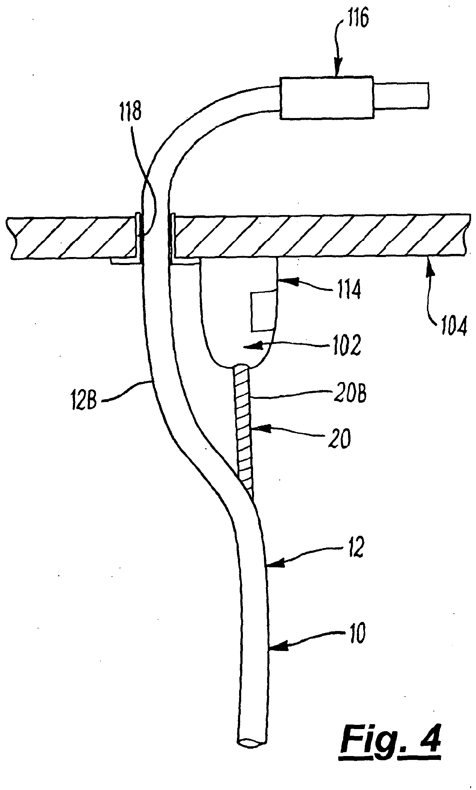

Figure 3 shows the connection of one end region of the electrically insulating cord 10 to a first connection assembly 101 in an electrical device in the form of a fixture, such as a light fitting 100. Figure 4 shows the connection of the opposite end region of the electrically insulating cord 10 to a second connection assembly 102 in a support, such as a ceiling 104.

Referring to Figure 3, the upper region of the light fitting 100 is shown, which comprises a housing 105. The first connection assembly 101 comprises a mechanical connector in the form of a first load bearing connector in the form of a first gripping device 106, suitable for gripping the load bearing member 20. The first gripping device 106 is mounted on the outside of the housing 105.

In Figure 3, a lower end portion 20A has been extracted from a lower end region 12A of the insulating sheath 12. The first gripping device 106 has suitable internal gripping components for gripping the extracted lower end portion 20A of the load bearing member 20 and to fasten the light fitting 100 securely to the load bearing member 20.

The first connection assembly 101 in the light fitting 100 also has a first electrical connection arrangement generally designated 108 having electrical terminals to connect to the elongate electrical conductors 14, 16, 18. The first electrical connection arrangement 108 can be any suitable electrical connection arrangement known in the art. The lower end portion 12A of the insulating sheath no longer has the load bearing member 20 extending therethrough, and can be arranged within the first electrical connection arrangement 108 in a manner in which each of the conductors is connected to a respective electrical terminal.

The electrically insulating cord 10 extends through an aperture 110 in the housing 105. An O-ring seal 112 is mounted in the aperture 110 to seal against the insulating sheath 12. As shown in the drawings, the insulating sheath 12 has a cross-sectional end profile that is substantially circular. In the electrically insulating cord 10 described herein, this provides the advantage that the O-ring seal 112 can seal fully against the insulating sheath 12, thereby preventing the ingress of water and insects.

Referring to Figure 4, the upper end region of the electrical insulating cord 10 is shown, which is connected to the second connection assembly 102 at the ceiling 104. The connection assembly 102 comprises a mechanical connector in the form of a second load bearing connector in the form of a second gripping device 114 mounted on the ceiling 104, and extending downwardly therefrom. The second gripping device 114 is the same as the first gripping device 106.

The second connection assembly 102 further includes a second electrical connection arrangement 116, which is the same as the first electrical connection arrangement 108.

In Figure 4, an upper end portion 20B of the load bearing member 20 has been extracted from an upper end region 12B of the insulating sheath 12, and is inserted into the second gripping device 114 to be gripped thereby.

The second connection assembly 102 also has a second electrical connection arrangement generally designated 116 having electrical terminals to connect to the elongate electrical conductors 14, 16, 18. The second electrical connection arrangement 116 can be the same as the first electrical connection arrangement 108.

The upper end portion 12B of the insulating sheath 12 no longer has the load bearing member 20 extending therethorough, and can pass through an aperture 118 in the ceiling to be arranged within the second electrical connection arrangement 116 in a manner in which each of the electrical conductors 14, 16, 18 is connected to a respective electrical terminal.

Thus, the light fitting 100 is suspended from the ceiling by the mechanical connection between the extracted portions 20A, 20B, and provides electrical connection between the first and second electrical connection arrangements 108, 116, thereby providing a supply of electricity to the light fitting 100.

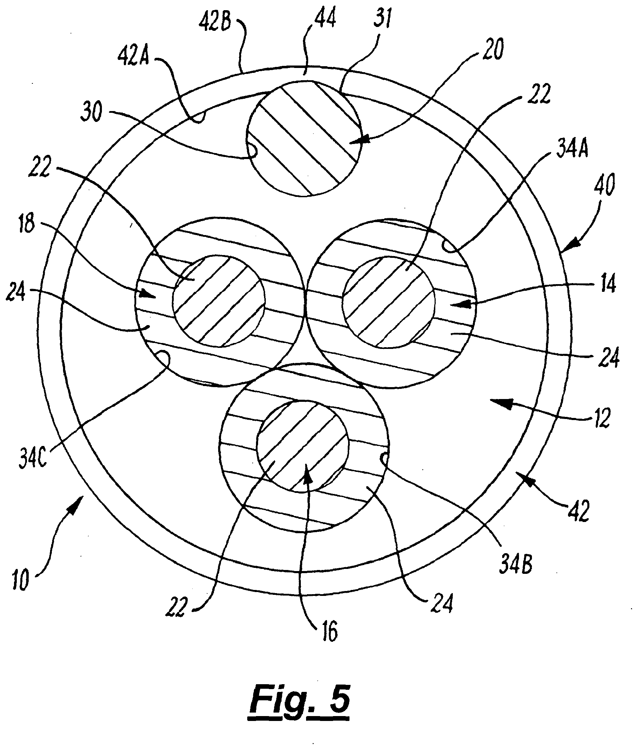

Figure 5 shows an electrically insulating cord 10, being an embodiment of the invention. The electrically insulating cord 10 shown in Figure 5 includes such modifications. The electrically insulating cord 10 shown in Figure 5 is similar to the electrically insulating cord 10 shown in Figure 1, having many of the same features as the electrically insulating cord 10 shown in Figure 1, these features having been designated with the same reference numerals as in Figures 1 to 4.

The electrically insulating cord 10 shown in Figure 5 differs from the example in that the electrically insulating cord 10 shown in Figure 5 has an outer covering arrangement 40 comprising the insulating sheath 12 and an outer sleeve 42, wherein the outer sleeve 42 extends around the insulating sheath 12. The outer sleeve 42 has an inner surface 42A in engagement with the insulating sheath 12, and an outer surface 42B

The insulating sheath 12 defines the elongate cavity 30 in which the load bearing member 20 is tightly held. The insulating sheath 12 also defines three elongate cylindrical spaces 34A, 34B and 34C in each of which a respective one of the conductors 14, 16, 18 is tightly held.

The outer covering arrangement 40 has an access formation in the form of an opening 31 in the insulating sheath 12 for the cavity 30, and a severable region 44 of the outer sleeve 42, the severable region 44 being thinner than the remainder of the outer sleeve 42. The severable region 44 of the outer sleeve 42 extends longitudinally along the load bearing member 20 in engagement therewith.

The opening 31 opens onto the inner surface 42A of the outer sleeve 42, so that the load bearing member 20 protrudes out of the insulating sheath 12 through the opening 31 to engage the outer sleeve 42. As can be seen from Figure 5, the region 44 of the outer sleeve 42 along the opening 31 is thinner than the thickness of the remainder of the outer sleeve 42. This thinner region 44 of the outer sleeve 42 is thereby weaker than the remainder of the outer sleeve 42.

The end portions of the load bearing member 20 can be peeled outwardly from the insulating sheath 12, thereby splitting the outer sleeve 42 at the region 44. This allows the end portions of the load bearing member to be extracted from the cavity 30 to extend through the outer sleeve 42, thereby disposing the end portions of the load bearing member so that they can, for example, be gripped by the first and second gripping devices 106, 114, in the same way as described above.

With the load bearing member 20 held within the insulating sheath 12, the electrically insulating cords 10 described herein provide aesthetically pleasing products, which are devoid of any external load bearing members.

The electrically insulating cords 10 described herein can be used to suspend light fittings from ceilings where the weight of the light fittings exceeds the maximum weight of light fittings that can be suspended using some of the prior art electrically insulating cords.

In the electrically insulating cords 10 described herein, the features of the channel 32 and the severable region 44, allowing the load bearing member 20 to be peeled away from the sheath 12, are advantageous. For example, they provide the advantages that installation of the insulating electric cord 10 is simple, and that any need to use a knife slit the cord 10 along its length is obviated.

Various modifications can be made without departing from the scope of the invention as defined by the appended claims.

## Claims

1. An insulated electric cord (10) comprising an elongate outer covering arrangement (12), first and second elongate electrical conductors (14, 16) held within the outer covering arrangement and extending longitudinally therethrough, and an elongate load bearing member (20) held within the outer covering arrangement and extending longitudinally therethrough, wherein the outer covering arrangement has an elongate access formation (31, 44) configured to allow a portion of the load bearing member to be extracted from the outer covering arrangement, **characterised in that** the access formation comprises a severable region of weakness (44) of the outer covering arrangement, said severable region extending alongside the load bearing member.

2. An insulated electric cord according to claim 1, wherein the portion of the load bearing member to be extracted is an end portion (20A, 20B).

3. An insulated electric cord according to claim 1 or 2, wherein the access formation (31, 44) is configured to allow opposite end portions (20A, 20B) of the load bearing member (20) to be extracted from the outer covering arrangement (12).

4. An insulated electric cord according to claim 1 for suspending an electrical device (100) from a support (104), wherein the first and second elongate electrical conductors (14, 16) are configured for electrically connecting the electrical device to wiring of a mains supply of electricity at the support, the elongate load bearing member (20) being configured for connection at a first end portion (20A) thereof to a first non-electrical load bearing connector (106) in the device and for connection at a second opposite end portion (20B) to a second non-electrical load bearing connector (114) at the support, the elongate access formation (31, 44) being configured to allow the first and second opposite end portions of the load bearing member to be extracted from the outer covering arrangement (12) via the elongate access formation and connected respectively to the aforesaid load bearing connectors.

5. An insulated electric cord according to any preceding claim, wherein the access formation (31, 44) is elongate and extends substantially the whole length of the outer covering arrangement (12).

6. An insulated electric cord according to any preceding claim, wherein each elongate conductor (14, 16) is embedded in the material of the outer covering arrangement (12).

7. An insulated electric cord according to any preceding claim, wherein the outer covering arrangement (12) comprises an elongate insulating sheath defining an elongate cavity (30) extending longitudinally through the outer covering arrangement.

8. An insulated electric cord according to claim 7, wherein the outer covering arrangement (12) comprises an elongate outer sleeve (42) provided around the insulating sheath.

9. An insulated electric cord according to claim 8, wherein the access formation is an elongate opening (31) of the cavity (30) to allow said portion (20A, 20B) of the load bearing member (20) to be removed from the outer covering arrangement (12), the load bearing member extending through the opening in the insulating sheath to engage the sleeve (42).

10. An insulated electric cord according to claim 9, wherein the portion of the sleeve (42) in engagement with the load bearing member (20) is thinner than the remainder of the sleeve, whereby said portion of the outer sleeve in engagement with the load bearing member is weaker than the remainder of the sleeve.

11. An insulated electric cord according to any of claims 8 to 10, wherein the insulating sheath defines at least one elongate space (34) extending longitudinally through the outer covering arrangement (12), the conductors (14, 16) being mounted in the, or each, elongate space.

12. An insulated electric cord according to claim 11, wherein a single elongate space (34) is defined through the insulating sheath, whereby each of the conductors extends longitudinally through the single elongate space, the elongate space having a substantially triangular end profile, and each of the conductors (14, 16) is provided at a respective apex of the triangle.

13. An insulated electric cord according to claim 11, wherein a respective elongate space (34A, 34B) is defined through the insulating sheath for each conductor, whereby each conductor (14, 16) extends longitudinally through the respective space.

14. A method of suspending an electrical device (100) from a support (104) using an insulated electric cord (10) as claimed in any of claims 1 to 13, said method comprising electrically connecting the first and second elongate electrical conductors (14, 16) to the electrical device and to a supply of electricity at the support, extracting a first end portion (20A) of the load bearing member (20) from the outer covering arrangement (12) via the access formation (31, 44), effecting a non-electrical connection between the first end portion of the load bearing member and a first load bearing connector (106) in the device, extracting a second opposite end portion (20B) of the load bearing member from the outer covering arrangement via the access formation, and effecting a non-electrical connection between the second end portion of the load bearing member and a second load bearing connector (114) at the support.

15. A method according to claim 14, wherein the step of extracting the first end portion (20A) of the load bearing member (20) from the outer covering arrangement (12) comprises peeling the first end portion of the load bearing member from the outer covering arrangement via the access formation, (31, 44) and wherein the step of extracting the second end portion (20B) of the load bearing member from the outer covering arrangement comprises peeling the second end portion of the load bearing member from the outer covering arrangement via the access formation.

## Patentansprüche

1. Isoliertes elektrisches Kabel (10), umfassend eine längliche Außenabdeckungsanordnung (12), erste und zweite längliche elektrische Leiter (14, 16), die in der Außenabdeckungsanordnung gehalten werden und sich in Längsrichtung dadurch erstrecken, und ein längliches lasttragendes Element (20), das in der Außenabdeckunganordnung gehalten wird und sich in Längsrichtung dadurch erstreckt, wobei die Außenabdeckungsanordnung eine längliche Zugriffsformierung (31, 44) aufweist, die konfiguriert ist, um einem Abschnitt des lasttragenden Elements zu ermöglichen, aus der Außenabdeckungsanordnung extrahiert zu werden, **dadurch gekennzeichnet, dass** die Zugriffsformierung eine abtrennbare Schwächeregion (44) der Außenabdeckungsanordnung umfasst, wobei sich die abtrennbare Schwächeregion entlang des lasttragenden Elements erstreckt.

2. Isoliertes elektrisches Kabel nach Anspruch 1, wobei der zu extrahierende Abschnitt des lasttragenden Elements ein Endabschnitt (20A, 20B) ist.

3. Isoliertes elektrisches Kabel nach Anspruch 1 oder 2, wobei die Zugriffsformierung (31, 44) konfiguriert ist, um es gegenüberliegenden Endabschnitten (20A, 20B) des lasttragenden Elements (20) zu ermöglichen, aus der Außenabdeckungsanordnung (12) extrahiert zu werden.

4. Isoliertes elektrisches Kabel nach Anspruch 1 zum Aufhängen einer elektrischen Vorrichtung (100) an eine Stütze (104), wobei der erste und zweite längliche elektrische Leiter (14, 16) konfiguriert sind, um die elektrische Vorrichtung an der Stütze mit einem Stromnetzanschluss elektrisch zu verbinden, wobei das längliche lasttragende Element (20) zur Verbindung an einem ersten Endabschnitt (20A) davon mit einem ersten nicht-elektrischen lasttragenden Verbinder (106) in der Vorrichtung und zur Verbindung an einem zweiten gegenüberliegenden Endabschnitt (20B) mit einem zweiten nicht-elektrischen lasttragenden Verbinder (114) an der Stütze konfiguriert ist, wobei die längliche Zugriffsformierung (31, 44) konfiguriert ist, um dem ersten und dem zweiten gegenüberliegenden Endabschnitt des lasttragenden Elements zu ermöglichen, über die längliche Zugriffsformierung aus der Außenabdeckungsanordnung (12) extrahiert und jeweils mit zu den oben genannten lasttragenden Verbindern verbunden zu werden.

5. Isoliertes elektrisches Kabel nach einem der vorangehenden Ansprüche, wobei die Zugriffsformierung (31, 44) länglich ist und sich im Wesentlichen entlang der gesamten Länge

6. Isoliertes elektrisches Kabel nach einem der vorangehenden Ansprüche, wobei jeder längliche Leiter (14, 16) im Material der Außenabdeckungsanordnung (12) eingebettet ist.

7. Isoliertes elektrisches Kabel nach einem der vorangehenden Ansprüche, wobei die Außenabdeckungsanordnung (12) eine längliche isolierende Ummantelung umfasst, die einen länglichen Hohlraum (30) definiert, der sich in Längsrichtung durch die Außenabdeckungsanordnung erstreckt.

8. Isoliertes elektrisches Kabel nach Anspruch 7, wobei die Außenabdeckungsanordnung (12) eine längliche Außenhülle (42) umfasst, die um die isolierende Ummantelung bereitgestellt ist.

9. Isoliertes elektrisches Kabel nach Anspruch 8, wobei die Zugriffsformierung eine längliche Öffnung (31) des Hohlraums (30) ist, um dem Abschnitt (20A, 20B) des lasttragenden Elements (20) zu ermöglichen, aus der Außenabdeckungsanordnung (12) entfernt zu werden, wobei sich das lasttragende Element durch die Öffnung in der isolierenden Ummantelung erstreckt, um die Hülle (42) in Eingriff zu nehmen.

10. Isoliertes elektrisches Kabel nach Anspruch 9, wobei der Abschnitt der Hülle (42), der in Eingriff mit dem lasttragenden Element (20) ist, dünner als die übrige Hülle ist, wodurch der Abschnitt der Außenhülle, der in Eingriff mit dem lasttragenden Element ist, schwächer als die übrige Hülle ist.

11. Isoliertes elektrisches Kabel nach einem der Ansprüche 8 bis 10, wobei die isolierende Ummantelung mindestens einen länglichen Raum (34) definiert, der sich in Längsrichtung durch die Außenabdeckungsanordnung (12) erstreckt, wobei die Leiter (14, 16) in dem oder in jedem länglichen Raum montiert ist.

12. Isoliertes elektrisches Kabel nach Anspruch 11, wobei ein einzelner länglicher Raum (34) durch die isolierende Ummantelung definiert ist, wodurch sich jeder der Leiter in Längsrichtung durch den einzelnen länglichen Raum erstreckt, wobei der längliche Raum ein im Wesentlichen rechtwinkliges Endprofil aufweist, und jeder der Leiter (14, 16) an einem jeweiligen Scheitelpunkt des Dreiecks bereitgestellt ist.

13. Isoliertes elektrisches Kabel nach Anspruch 11, wobei ein jeweiliger länglicher Raum (34A, 34B) durch die isolierende Ummantelung für jeden Leiter definiert ist, wodurch sich jeder Leiter (14, 16) in Längsrichtung durch den jeweiligen Raum erstreckt.

14. Verfahren zum Aufhängen einer elektrischen Vorrichtung (100) von einer Stütze (104) mithilfe eines isolierten elektrischen Kabels (10) nach einem der Ansprüche 1 bis 13, wobei das Verfahren ein elektrisches Verbinden des ersten und zweiten länglichen elektrischen Leiters (14, 16) mit der elektrischen Vorrichtung und mit einem Stromanschluss an der Stütze, ein Extrahieren eines ersten Endabschnitts (20A) des lasttragenden Elements (20) aus der Außenabdeckungsanordnung (12) über die Zugriffsformierung (31, 44), ein Bewirken einer nicht-elektrischen Verbindung zwischen dem ersten Endabschnitt des lasttragenden Elements und einem ersten lasttragenden Verbinder (106) in der Vorrichtung, ein Extrahieren eines zweiten gegenüberliegenden Endabschnitts (20B) des lasttragenden Elements aus der Außenabdeckungsanordnung über die Zugriffsformierung und ein Bewirken einer nicht-elektrischen Verbindung zwischen dem zweiten Endabschnitt des lasttragenden Elements und eines zweiten lasttragenden Verbinders (114) an der Stütze umfasst.

15. Verfahren nach Anspruch 14, wobei der Schritt des Extrahierens des ersten Endabschnitts (20A) des lasttragenden Elements (20) aus der Außenabdeckungsanordnung (12) ein Schälen des ersten Endabschnitts des lasttragenden Elements von der Außenabdeckungsanordnung über die Zugriffsformierung (31, 44) umfasst und wobei der Schritt des Extrahierens des zweiten Endabschnitts (20B) des lasttragenden Elements von der Außenabdeckungsanordnung ein Schälen des zweiten Endabschnitts des lasttragenden Elements von der Außenabdeckungsanordnung über die Zugriffsformierung umfasst.

## Revendications

1. Cordon électrique isolé (10) comprenant un agencement de revêtement extérieur allongé (12), des premier et second conducteurs électriques allongés (14, 16) maintenus à l'intérieur de l'agencement de revêtement extérieur et s'étendant longitudinalement à travers celui-ci, et un élément porteur de charge allongé (20) maintenu à l'intérieur de l'agencement de revêtement extérieur et s'étendant longitudinalement à travers celui-ci, dans lequel l'agencement de revêtement extérieur a une formation d'accès allongée (31, 44) configurée pour permettre d'extraire une partie de l'élément porteur de charge de l'agencement de revêtement extérieur, **caractérisé en ce que** la formation d'accès comprend une zone de faiblesse séparable (44) de l'agencement de revêtement extérieur, ladite zone séparable s'étendant le long de l'élément porteur de charge.

2. Cordon électrique isolé selon la revendication 1, dans lequel la partie de l'élément porteur de charge à extraire est une partie d'extrémité (20A, 20B).

3. Cordon électrique isolé selon la revendication 1 ou 2, dans lequel la formation d'accès (31, 44) est configurée pour permettre d'extraire des parties d'extrémité opposées (20A, 20B) de l'élément porteur de charge (20) de l'agencement de revêtement extérieur (12).

4. Cordon électrique isolé selon la revendication 1 pour suspendre un dispositif électrique (100) à un support (104), dans lequel les premier et second conducteurs électriques allongés (14, 16) sont configurés pour connecter électriquement le dispositif électrique au câblage d'une alimentation électrique secteur au niveau du support, l'élément porteur de charge allongé (20) étant configuré pour une connexion au niveau d'une première partie d'extrémité (20A) de celui-ci à un premier connecteur porteur de charge non électrique (106) dans le dispositif et pour une connexion au niveau d'une seconde partie d'extrémité opposée (20B) à un second connecteur porteur de charge non électrique (114) au niveau du support, la formation d'accès allongée (31, 44) étant configurée pour permettre aux première et seconde parties d'extrémité opposées de l'élément porteur de charge d'être extraites de l'agencement de revêtement extérieur (12) via la formation d'accès allongée et connectées respectivement aux connecteurs porteurs de charge susmentionnés.

5. Cordon électrique isolé selon l'une quelconque des revendications précédentes, dans lequel la formation d'accès (31, 44) est allongée et s'étend sensiblement sur toute la longueur de l'agencement de revêtement extérieur (12).

6. Cordon électrique isolé selon l'une quelconque des revendications précédentes, dans lequel chaque conducteur allongé (14, 16) est noyé dans le matériau de l'agencement de revêtement extérieur (12).

7. Cordon électrique isolé selon l'une quelconque des revendications précédentes, dans lequel l'agencement de revêtement extérieur (12) comprend une gaine isolante allongée définissant une cavité allongée (30) s'étendant longitudinalement à travers l'agencement de revêtement extérieur.

8. Cordon électrique isolé selon la revendication 7, dans lequel l'agencement de revêtement extérieur (12) comprend un manchon extérieur allongé (42) prévu autour de la gaine isolante.

9. Cordon électrique isolé selon la revendication 8, dans lequel la formation d'accès est une ouverture allongée (31) de la cavité (30) pour permettre à ladite partie (20A, 20B) de l'élément porteur de charge (20) d'être retirée de l'agencement de revêtement extérieur (12), l'élément porteur de charge s'étendant à travers l'ouverture dans la gaine isolante pour mettre en prise le manchon (42).

10. Cordon électrique isolé selon la revendication 9, dans lequel la partie du manchon (42) en prise avec l'élément porteur de charge (20) est plus mince que le reste du manchon, grâce à quoi ladite partie du manchon extérieur en prise avec l'élément porteur de charge est plus faible que le reste du manchon.

11. Cordon électrique isolé selon l'une quelconque des revendications 8 à 10, dans lequel la gaine isolante définit au moins un espace allongé (34) s'étendant longitudinalement à travers l'agencement de revêtement extérieur (12), les conducteurs (14, 16) étant montés dans le, ou chaque espace allongé.

12. Cordon électrique isolé selon la revendication 11, dans lequel un espace allongé unique (34) est défini à travers la gaine isolante, moyennant quoi chacun des conducteurs s'étend longitudinalement à travers l'espace allongé unique, l'espace allongé ayant un profil d'extrémité sensiblement triangulaire, et chacun des conducteurs (14, 16) est prévu à un sommet respectif du triangle.

13. Cordon électrique isolé selon la revendication 11, dans lequel un espace allongé respectif (34A, 34B) est défini à travers la gaine isolante pour chaque conducteur, moyennant quoi chaque conducteur (14, 16) s'étend longitudinalement à travers l'espace respectif.

14. Procédé de suspension d'un dispositif électrique (100) à un support (104) en utilisant un cordon électrique isolé (10) selon l'une quelconque des revendications 1 à 13, ledit procédé comprenant la connexion électrique des premier et second conducteurs électriques allongés (14, 16) au dispositif électrique et à une alimentation électrique au niveau du support, l'extraction d'une première partie d'extrémité (20A) de l'élément porteur de charge (20) de l'agencement de revêtement extérieur (12) via la formation d'accès (31, 44), la réalisation d'une connexion non électrique entre la première partie d'extrémité de l'élément porteur de charge et un premier connecteur porteur de charge (106) dans le dispositif, l'extraction d'une seconde partie d'extrémité opposée (20B) de l'élément porteur de charge de l'agencement de revêtement extérieur via la formation d'accès, et la réalisation d'une connexion non électrique entre la seconde partie d'extrémité de l'élément porteur de charge et un second connecteur porteur de charge (114) au niveau du support.

15. Procédé selon la revendication 14, dans lequel l'étape d'extraction de la première partie d'extrémité (20A) de l'élément porteur de charge (20) de l'agencement de revêtement extérieur (12) comprend le décollement de la première partie d'extrémité de l'élément porteur de charge de l'agencement de revêtement extérieur via la formation d'accès (31, 44) et dans lequel l'étape d'extraction de la seconde partie d'extrémité (20B) de l'élément porteur de charge de l'agencement de revêtement extérieur comprend le décollement de la seconde partie d'extrémité de l'élément porteur de charge de l'agencement de revêtement extérieur via la formation d'accès.
